# EUROPEAN PATENT APPLICATION

(11) **EP 3 885 981 A1**
(43) Date of publication of application: **29.09.2021**
(21) Application number: 21164207.9
(22) Date of filing: 23.03.2021
(51) Int. Cl.: G06K 9/00

(54) **DIGITAL FINGERPRINT-BASED, OPT-IN BIOMETRIC AUTHENTICATION SYSTEMS**

(30) Priority: 23.03.2020 US 202062993693 P
(71) Applicant: Alitheon, Inc., Bellevue, WA 98004 (US); Ross, David Justin, Bellevue, WA 98004 (US); Land, Scot E., Bellevue, WA 98004 (US)
(72) Inventor: Ross, David Justin, Bellevue, WA Washington 98004 (US); Land, Scot E., Bellevue, WA Washington 98004 (US)
(74) Representative: Dendorfer, Claus

(57) **Abstract**

Devices, systems, and methods use captured image data of any part of a body as a source to form a digital fingerprint to biometrically identify the body. To protect privacy and prevent class-based profiling of people, a biometric authentication system does not preserve any class-based information or do any class-based discrimination. The digital fingerprint uniquely authenticates whether an individual being sampled is a particular previously sampled individual without having to establish an identity of the individual, and cannot be reverse-engineered to produce any information (e.g., a picture) that could be used to identify the individual (*e.g*., name) or the person's class, gender, race, or any other group information.

## Description

### COPYRIGHT NOTICE

COPYRIGHT © 2019-2021 Alitheon, Inc. A portion of the disclosure of this document contains material which is subject to copyright protection. The copyright owner has no objection to the facsimile reproduction by anyone of the document or the disclosure, as it appears in the file or records of the European Patent Office or other national patent offices, but otherwise reserves all copyright rights whatsoever.

### TECHNICAL FIELD

The present disclosure generally relates to image-based biometrics. More particularly, but not exclusively, the present disclosure relates to opt-in, digital fingerprint based biometric systems for authentication of a person while protecting privacy and avoiding class-based profiling.

### BACKGROUND

Biometric identification and authentication are being increasingly used in government, industrial, and private applications. Major social media companies routinely scour labeled images of their customers (and their customers' friends) to produce references for individual identification using facial images. Amazon, for example, has recently patented a doorbell system based on face recognition that surveilles the surrounding neighborhood looking for "suspicious individuals" and reporting them. These systems are image-based, involuntary, and increasingly seen to violate fundamental civil liberties, including prohibition of unreasonable searches. Their potential for profiling and other abuses is becoming increasingly clear and a significant backlash is developing.

What drives such systems toward acceptance by the general population is convenience - being recognized as you approach your house so the door automatically unlocks, being able to check in at the airport or go around security checkpoints without presenting identity documents, or making automatic biometrically-authenticated payments, for example, is convenient. The person carries the means to establish his identity and permissions with him without the possibility of misplacing it or having it stolen (as can happen with other forms of identification such as identity cards). This convenience has led to increasing but grudging public acceptance of current facial recognition systems.

Such systems are being driven by corporate and government desire for greater information control, public safety, and concerns about terrorism and other crimes. Particularly for most current kinds of facial recognition, social media provides a wealth of training data in the form of labeled photos.

The utility of identification systems that do not require any action at the point of identification on the client's part is obvious: the ability to enter secure spaces, obtain services, or make purchases for example without having to show an identity document or provide a password is faster, less subject to spoofing, and more convenient for the client. Such systems also allow an extra level of security over more traditional methods such as identity documents and passwords. Similarly, being able to spot known criminals and identify terrorists makes them especially attractive to policing organizations.

As such systems have become more common, disturbing trends have emerged. Some well-known facial recognition systems have been shown to misidentify darker-skinned people at a substantially higher rate, for example, indicating that skin color is a critical part of those systems. Coupling such faulty systems with security or surveillance applications greatly increases the potential for abuse and harassment of innocent citizens. Further, as such systems become more ubiquitous and interlinked, their ability to track ordinary citizens when out in public leads to substantial fourth-amendment concerns.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### BRIEF SUMMARY OF THE DISCLOSURE

The need for an opt-in, civil-liberties-protecting authentication system such as the one taught in this disclosure is becoming increasingly clear to the inventors.

The present disclosure teaches devices, systems, and methods for using any part of any body as a source to biometrically identify the body. Captured image data is processed to form a digital fingerprint of the body part scanned. To protect privacy and prevent class-based profiling of people, a biometric authentication system will be ineffective if it preserves any class-based information on the person being identified. The system disclosed herein does not preserve any class-based information or do any class-based discrimination and indeed, in order to function as taught, the system cannot preserve such information.

Because the digital fingerprint only contains information that distinguishes one particular individual from all others, it cannot be reverse-engineered to produce any information that could be used by a human (such as a picture) to identify the individual or his class, gender, race, or any other group information.

Another feature of this disclosure is a system that ensures that information about the person (such as their name, access permissions, and so on that might be in, say, their employer's database) and image data from acquisition (or any data that in itself contains identifying information or information that can be reverse engineered to identify the person) are never held by the same entity. In this way, individual privacy is assured and class-based profiling is eschewed.

This disclosure teaches a biometric identification system that allows all the benefits desired by customers but that avoids any possibility of profiling or general surveillance. The system is opt-in, preserves no image or class-based (including skin color) information, and leaves authentication squarely in the hands of the person being identified. The taught system cannot be corrupted for general surveillance, for tracking of unwary citizens, or for commercial data-gathering from an unsuspecting public. The system has no central database tying a person's image to identifying information of any kind. It is impossible to use the data captured by the system for profiling because the stored data is not reversible to produce anything like an image of the person or to extract any information related to any group of which the person may belong. Further, the system is not dependent on faces for recognition - it works on any body part or skin surface.

This Brief Summary has been provided to introduce certain concepts in a simplified form that are further described in detail in at least the Detailed Description. Except where otherwise expressly stated, the Brief Summary does not identify key or essential features of the claimed subject matter, nor is it intended to limit the scope of the claimed subject matter.

### BRIEF DESCRIPTION OF THE DRAWINGS

To enable the reader to realize one or more of the above-recited and other advantages and features of the present disclosure, a more particular description follows by reference to specific embodiments thereof which are illustrated in the appended drawings. Understanding that these drawings depict only typical embodiments of the disclosure and are not therefore to be considered limiting of its scope, the present disclosure will be described and explained with additional specificity and detail through the use of the accompanying drawings in which:
FIGURE 1 is a simplified block diagram of one example of a system consistent with the present disclosure.
FIGURE 2 is a simplified diagram illustrating image capture using a non-contact scanner for the purpose of identification or authentication based on digital fingerprinting.
FIGURE 3A is a simplified diagram illustrating image capture using a stationary contact scanner for the purpose of identification or authentication based on digital fingerprinting.
FIGURE 3B is a simplified diagram illustrating image capture using a portable contact scanner for the purpose of identification or authentication based on digital fingerprinting.
FIGURE 4 is a simplified diagram of an image capture station.
FIGURE 5 is a simplified flow diagram of a process for induction of a person into a digital fingerprint-based biometric authentication system.
FIGURE 6 is a simplified conceptual diagram illustrating what information is held, and what information is not held, by each of the three principal entities in a digital fingerprint-based biometric authentication system.
FIGURE 7 is a simplified flow diagram of an example process for biometric authentication of a person while protecting their privacy.

### DETAILED DESCRIPTION

The present invention may be understood more readily by reference to this detailed description of the invention. The terminology used herein is for the purpose of describing specific embodiments only and is not limiting to the claims unless a court or accepted body of competent jurisdiction determines that such terminology is limiting. Unless specifically defined herein, the terminology used herein is to be given its traditional meaning as known in the relevant art.

In the following description, certain specific details are set forth in order to provide a thorough understanding of various disclosed embodiments. However, one skilled in the relevant art will recognize that embodiments may be practiced without one or more of these specific details, or with other methods, components, materials, etc. In other instances, well-known structures associated with computing systems including client and server computing systems, as well as networks have not been shown or described in detail to avoid unnecessarily obscuring descriptions of the embodiments. Prior to setting forth the embodiments however, it may be helpful to an understanding thereof to first set forth definitions of certain terms that are used hereinafter.

**Customer.** In the disclosed system, *customer* refers to an individual who wishes to be biometrically identified for some purpose. That purpose may be, for example, bypassing security at an airport, entering a secure space, being able to collect a piece of luggage, or many other things. The term *customer* is not itself critical and various alternatives should be considered equivalents.

**Digital inductor** (or biometric inductor) is a system that captures biometric information about the customer, extracts a digital fingerprint from that information, removes all class-base identifying information (automatically), destroys any images, associates the digital fingerprint with a token such as a serial number, and submits the token to a separate entity - the system operator. The digital inductor may also serve as a digital authenticator (or *biometric authenticator)* as detailed below.

**System Operator** is a system or server that is distinct from but communicates with the digital inductor and the digital authenticator (which again may be the same entity). The system operator exclusively maintains (in a database) all identifying and permission information linked to a token such as a serial number.

**Serial Number** is but one species of a token, which refers to any means of conveying from the biometric authenticator to the system operator an indication of which database record (in the system operator datastore) is associated with the customer is in view.

**The difference between "Identification" and "Authentication".** To make the teachings of this disclosure clear, it is important at the outset to distinguish two terms that are often used interchangeably: "identification" and "authentication". In the context of this disclosure, "authentication" means determining that the person presented to the system is authorized to perform some task such as entering a secure space, collecting some object such as baggage, or making a purchase. "Identification" means determining who this person is: determining their identity. Thus, authentication says the person is allowed to do what they seek to do. Identification ties them to a specific identity rather than just to a set of permissions.

The present system in some embodiments can be used for both, but the way it is designed (tri-corner possession of data and no preservation of separate identifying information such as an image) means that while it is possible to tie a capture of the person's image to that person's identity, it cannot be done by any one entity, since no entity possesses enough of the information to do so.

The term physiological element refers to any whole or part of a living organism *(i.e.,* person, animal, plant, or any other living entity). A physiological element may be an entire body, an entire area of a body, or a portion of a larger area of a body. A physiological element may be visible to a naked eye. A physiological element may require magnification to be visible to a naked eye. Accordingly, there is no physical size limitation to the physiological elements described herein. A physiological element may be internal or external to the living organism. For example, physiological elements as discussed in the present disclosure may comprise bones, organs, muscles, connective and other tissue, fluids, hair, fur, skin, nails, scales, leaves, bark, roots, and any other elements of a living entity, and in such cases, constituent and related parts of the particular physiological element are also included. For example, in some embodiments of the present disclosure, "skin" is imaged in the method of biometric identification. In these cases, the skin comprises pores, hairs, warts, moles, scars, pigmentation, age spots, vascularization, tattoos, and other components of, or associated with, the skin. As the context permits, where the term, skin, is used in the present disclosure, the term, physiological element, may be suitably substituted.

The systems, methods, and devices taught in the present disclosure include non-contact, image-based biometrics using skin features. Many and various non-limiting imaging means are contemplated. These imaging devices that acquire the data used in the digital fingerprinting processes of the present disclosure may vary physically based on the selected physiological element (e.g., body part, portion of the body or body part, and the like), but the same underlying approach is applicable to any skin area. For example, while the back of a hand may be imaged differently than the middle of a forehead, the imagers used to capture digital images of both physiological elements, and many others, are contemplated.

Embodiments of the present disclosure include discussions directed toward skin patches on the fingers, the palms, and the forehead. Conventional fingerprint, palm print, and face recognition systems, however, are expressly excluded. The non-contact image-based biometric identification systems described in the present disclosure are different from the conventional systems. The areas of the skin chosen for identification are selected based on the specific circumstances or requirements of an application that may include, for example, security, privacy, ease of imaging in a given application, and so on. In principle, in addition to the various embodiments described herein, any physiological area of anybody could, in principle, be used.

The present disclosure describes systems and devices that employ three general methods for collecting optical information used for skin-based biometric identification: two-dimensional (2D) imaging, focus stacked imaging, and full three-dimensional (3D) imaging. These three exemplary methods are not exclusive. Any method of acquiring a high-quality image of the desired physiological element is in view.

The systems, devices, and methods of the present disclosure analyze an image of the physiological element that has sufficient resolution to clearly show the natural detail and variation in the physiological element (e.g., skin). These variations may be genetically based, the result of wear and tear or aging, or from any other source provided at least some number of the variations are long-enough lasting to be adequate for induction and identification sessions that may be separated by relatively lengthy periods of time. While clarity of image is one factor of the systems, devices, and methods described herein, and while images having extreme or microscopic resolution may be used, extreme or microscopic resolution is generally not required. In most cases, resolution on the object of a few hundred dots-per-inch (DPI) is enough, which is easily achievable with existing image acquisition means (e.g., cameras).

The most general characterization of a point of interest may include its texture *(e.g.,* the texture of the skin at that area), its location on a surface or within an object, local shape features, color, and so on, and the inclusion of any subset of these is also in view in this disclosure. Accordingly, the present disclosure describes systems, devices, and methods that are not limited to a single type of physiological element, and instead, these systems, devices, and methods are concurrently applicable to a wide plurality of physiological elements.

In contrast to the conventional systems, the systems, devices, and methods of the present disclosure are concurrently applicable to any number of physiological elements. A digital fingerprint, as applied herein, may contain any one or more of depth information, shape information, surface texture information, and other information. Accordingly, a digital fingerprint, as applied herein, may also contain only shape information, and nothing else, and still be in view in this disclosure. Different from the conventional technologies, however, even when the digital fingerprints of a single system, device, or method of the present disclosure contain only, for example, shape information, the shape information may be associated with any number of different types of physiological elements *(e.g.,* noses, feet, toes, fingers, jowls, teeth, and the like) in a single system.

The systems, devices, and methods of the present disclosure work on any physiological element *(e.g.,* body part) using essentially identical technology: digital fingerprinting of the physiological element *(e.g.,* skin) texture, shape, and related components. Some non-limiting examples that might be used for identification include the back, the front, or the entire hand, the forehead, ears, and various parts of the foot including the sole.

### Illustrative System

The taught system has multiple components that natively prevent civil liberties violations such as are common with existing systems. These components, as the discussion below will make clear, are inherent parts of the system: were, for example, class-based information preserved in the reference database of digital fingerprints, the taught system would not function.

This point is important and worth stating again: while all forms of biometric identification can, in theory, have civil liberties protection grafted onto them or mandated by law, in the taught system the civil liberties protection is an essential result of the way the system functions (and hence one of the novel points of this teaching) - without them, its fundamental authentication capabilities would not function. It is not necessary for the public to believe promises from the implementers of the taught system that they won't use the data for illicit purposes; the implementers of the taught system are not given and do not have access to such data in the first place. This disclosure teaches several methods whereby profiling and other civil-liberties-violating capabilities are made impossible. Any of them separately, and any combination of them, are in view in the teachings of this patent.

Herein we refer to particular kinds of biometric authentication such as "face" and "hand," but it should be understood that this disclosure encompasses the use of digital fingerprints of any skin portion or body part for authentication when used in the taught system. In this sense it is related to our co-pending application, "Skin-based Biometric Identification using Digital Fingerprints" **[0670]** filed 11/12/2019.

The first (Customer), second (Biometric inductor/ authenticator) and third (System Operator or "Sysop") entities were introduced above. As an added privacy measure, in one embodiment the individual (Customer) holds in encrypted form their previously-inducted digital fingerprint, the one associated with the system operator-provided serial number. In a preferred embodiment, at identification, a digital fingerprint is extracted again by the biometric information capturer. If the person holds his own digital fingerprint, the newly-extracted one is compared with the stored one and, if the match is sufficiently close, the stored serial number is passed on to the system operator's database. In this case the biometric information capturer does not retain a database of the customers' digital fingerprints. If the customer does not hold his own digital fingerprint (in association with the serial number), then the biometric information capturer must store such information. But in either case all identifying information beyond the digital fingerprint is destroyed.

The third entity, the system operator, may be the person's employer, a security force, an airline or airport, any anyone holding information on customers. This operator has a database associating the above-described serial number with the information they hold on the person. In the envisioned opt-in system, the data held by the system operator is presumably voluntarily provided by the customer as a condition of employment, access to a particular place, or for many other possible reasons.

It is generally believed (and is required by current systems) that authentication is a three-step process: first the person presented to the system is identified, *then* the system determines that the identified person is authorized to perform some action, and *then* the person is allowed to perform the action. The weakness in such a system - particularly when face-based - is that the system associates an image of the person with identifying information about who the person is. Such identifying information could then be used for any purpose, including profiling. The taught system never makes such a coupling - indeed, it *cannot* make such a coupling.

In one preferred embodiment, the taught system is used solely for authentication - is this person allowed to perform some action. In many cases, that is all that is required: If the digital fingerprint of the person presented for entry to a secure space, for example, is associated with a record saying that whoever has that digital fingerprint is allowed entry, there is no need for otherwise identifying the person.

Even when the taught system is used to identify a person, it never associates an image or even a digital fingerprint with the person's identity. The taught system reverses the "identification then authentication" sequence. All the biometric information extractor does after extracting the digital fingerprint is determine whether the customer is in the system operators' database (because the biometric information extractor has previously provided such a record) and, if so, to provide the serial number to the system operator.

The system operator has (from when the database entry on the customer was created) a record on the customer containing information necessary for the person's interaction with the system operator. Said information is accessible through, or indexed by, the provided serial number. Without both the biometric digital fingerprint and the identifying (or permissions) database record (one in the hands of the customer or the biometric information inductor, the other in system operator's database), the system cannot function.

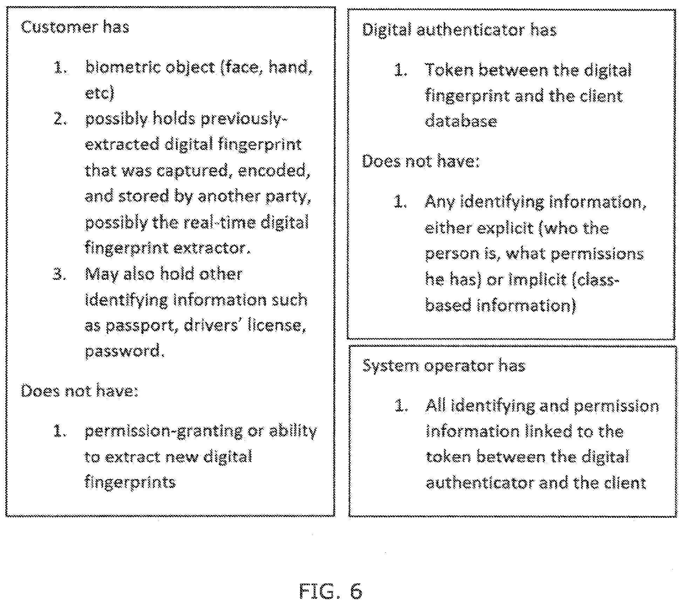

**Tri-cornered authentication.** There are several ways the taught system can protect civil liberties while carrying out its authentication functions. We described above three different components of the taught system: the customer (the person seeking to perform some task), the digital fingerprinting system (that takes opt-in images of the customer and identifying information and provides to the system operator (the entity on whose behalf the system is being run) such information and the serial number (but not the digital fingerprint). At initial induction, the biometric authenticator may receive from the customer identifying information that will be passed on to the system operator along with an associated serial number. Alternatively, that information may be provided directly to the system operator who provides some means to the customer for the customer to pass through the biometric authenticator to the system operator to tell which database record refers to the customer. Figure 6 is a simplified conceptual diagram illustrating what information is held, and what information is not held, by each of the three principal entities in a preferred digital fingerprint-based biometric authentication system.

The identifying information along with any captured images are destroyed by the digital fingerprint system (at both initial induction and later authentication), which keeps only the digital fingerprint and the serial number (unless, as discussed above, such are held by the customer). In subsequent authentication, the digital fingerprinting system again captures the images, extracts the digital fingerprint, matches the digital fingerprint against their record or the customer's, provides a serial number and notification of successful matching of the customer with the serial number through the digital fingerprint to the system operator, and destroys the images and other identifying information.

In the system operator's database (but not in the biometric data collector's database), that serial number is tied to information about the customer (provided by the customer, a requirement for his employment, his passenger ID number, or anything else).

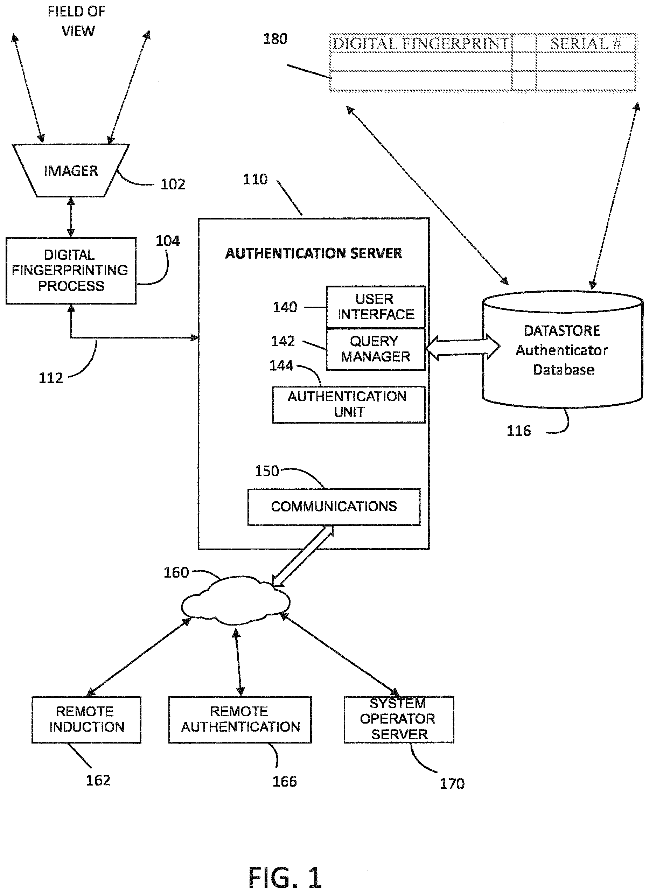

Figure 1 is a simplified block diagram of one example of a system consistent with the present disclosure. A person or other body or body part (not shown) may present a part of her body, for example, a hand, finger, face, etc. into the field of view of the scanner or imager 102, indicated by the dashed lines. The captured image data is processed by a process 104 to extract digital fingerprint(s) therefrom. Digital fingerprinting is described in more detail below. These elements may be discrete or integrated. For example, the scanner or imager may be a camera in a smartphone, and the digital fingerprinting process may be an app on the same smartphone. Alternatively, intermediate data (for example, digital image data) may be transmitted over a network to a remote processor to generate one or more digital fingerprints from the image data. In some embodiments, a remote induction facility 162, for example, a kiosk, may communicate over a network 160 with an authentication server 110.

The digital fingerprint of the user or subject may be securely communicated to the server 110 via path 112 using known communications technology. The server 110 is coupled to (or includes) a datastore 116. The data store may contain various databases and or tables, including, for example, records that store digital fingerprints. The server may implement, for example, a user interface 140, a query manager 142 for interaction with the datastore 116, and authentication process or application 144. One use of the authentication process may be to identify and or authenticate a person based on an acquired digital fingerprint. To authenticate or identify a person, the authentication process 144 may acquire a digital fingerprint (from a local scanner 102 or remotely 162) and using the query manager 142, search the datastore 116 to find a matching (or best match) digital fingerprint record. In a preferred embodiment, the authentication server stores the digital fingerprint in association with an assigned serial number in records 180 in the datastore 116. In this illustrative example, the server typically may also include a communications component 150. Various communications components 150 may be included to communicate for example, over a network 160 which may be local, wide area, internet, etc.

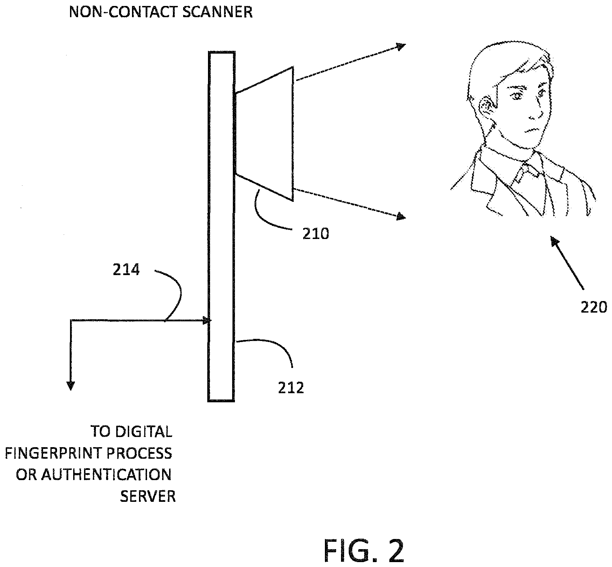

Figure 2 is a simplified illustration of an example of provisioning a non-contact scanner 210, here mounted on a preferably rigid supporting structure 212. The scanner 210 may capture images of a person or part of a person within its field of view, for example, the face of a man 220. As explained, any region of exposed skin of the person may be imaged to generate a digital fingerprint for identification. The generally digital image data may be transmitted via a connection 214 to a digital fingerprint process such as 104 in Figure 1.

Example embodiments of the imaging approach are given in the next several paragraphs. They are meant to be descriptive, not limiting. As a particular case in point, discussions of physical constraints are merely exemplary since, as discussed herein, imaging could be done with no contact with any surface.

Two-dimensional (2D) Imaging. At induction, a regular camera may be used to capture a single high-resolution image of the back of the hand. The hand must be held relatively stationary, so an acceptable image can be captured. Because a single image is acquired or otherwise formed, and because the hand is not flat, the image in the present example is captured with an acceptable depth of field. This, in general, may be true of all body parts analyzed by a particular system, device, or method. That is, in-focus images of the physiological elements *(e.g.,* parts of the skin) against which authentication is being performed is desirable. Focus stacking or other means can be used to produce an all-in-focus 2D image of the hand.

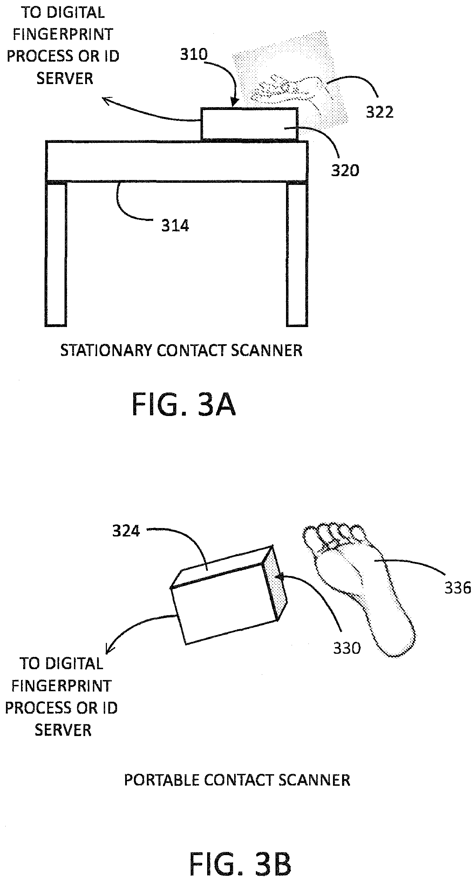

Figure 3A is a simplified diagram illustrating one example of image capture using a stationary contact scanner. Here, a scanner 320 is positioned on a supporting structure 314. The scanner has a contact surface 310. For example, the contact surface 310 may be transparent to frequencies of interest to a camera or other imager positioned inside the scanner 320 so that at least a portion of the contact surface is within the field of view of the imager, and at least the exterior surface of the contact surface is within a depth of focus of the imager. In this illustration, a back side of a hand 322 may be placed on the contact surface 310 for imaging. Figure 3B illustrates using a portable contact scanner 324, which may be hand-held. The portable scanner 324 has a contact surface 330 which may be used, for example, to capture one or more images of any portion of a foot 336.

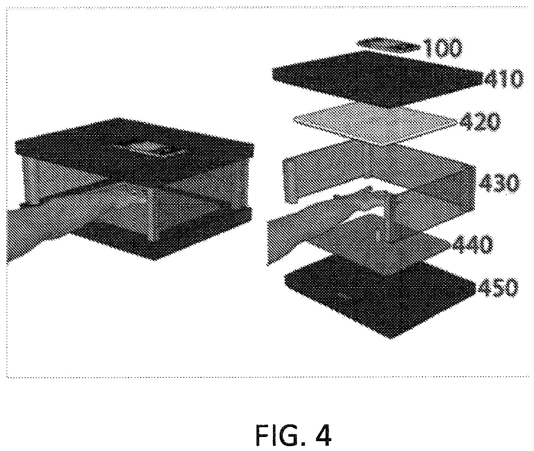

Figure 4 is a simplified diagram of one example of an image capture station. A generally flat, rigid substrate 450 supports a base layer 440. The base layer 440 preferably includes a post or other means for guiding placement of a subject's hand on the base layer. Sidewalls 430 are arranged on the base layer so as to form an enclosure above the base layer with one side open to receive a hand or other part for imaging. A top layer 420 covers the enclosure. A cover 410 fits on top of the top layer and supports an imaging device, for example, a smartphone 100. The smartphone camera is aligned over an aperture provided through the cover and the top layer for capturing an image of the body part positioned on the base layer. This simple arrangement is sufficient to capture images of the back of the hand sufficient to form a unique digital fingerprint of the subject.

Three-dimensional (3D) Imaging. 3D imaging can be done in several ways, all in view of the present disclosure. Stereo, depth mapping, structure from motion, plenoptic cameras, and focus stacking are examples. Points of interest may incorporate features based on the 3D shape of the object. After the images are collected and, if necessary, combined, digital fingerprints are extracted and placed in a database as reference objects. These digital fingerprints contain characterizations of points of interest that may contain information on surface texture, surface shape, and internal features of the body part. Later, when the hand is again presented to a similar acquisition station, the resulting digital fingerprint will be compared with the reference database and the best candidate chosen for identification.

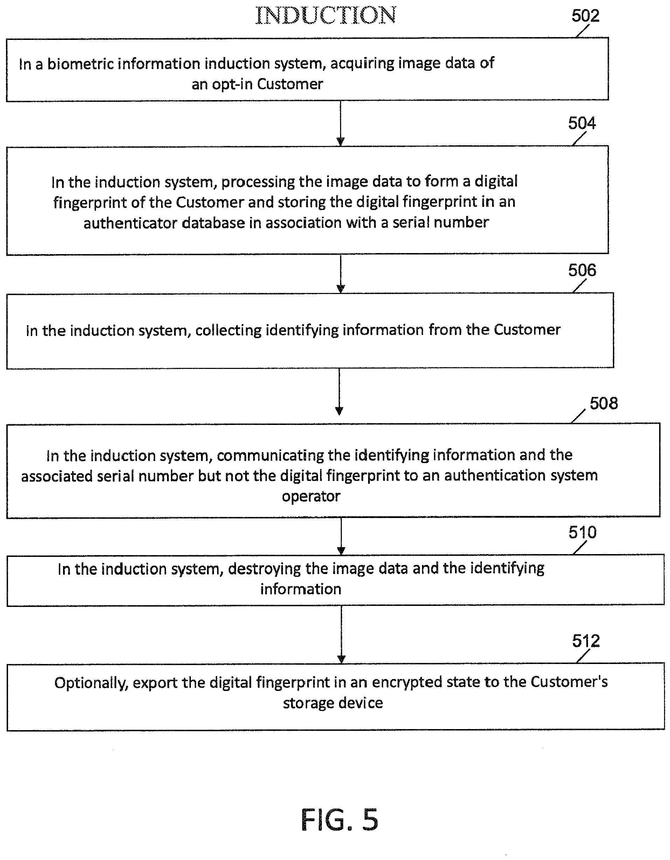

Figure 5 is a simplified flow diagram of an example process for induction of a person into a digital fingerprint-based biometric authentication system. To begin, in a biometric information induction system, acquiring image data of an opt-in Customer, block or step 502. Next, in the induction system, processing the image data to form a digital fingerprint of the Customer and storing the digital fingerprint in an authenticator database in association with a serial number, block 504.

Next, in the induction system, collecting identifying information from the Customer, block 506. Then, in the induction system, communicating the identifying information and the associated serial number but not the digital fingerprint to an authentication system operator, block 508. In the induction system, destroying the image data and the identifying information, block 510. Optionally, exporting the digital fingerprint in an encrypted state to the Customer's storage device, block 512.

It is important to note that this disclosure is directed to a biometric authentication system that is resistant to abuse; we are not claiming that the system operator can't do illegal or improper things with the data he holds, just that there is no direct tie between the customer's identity and his image or other data containing class-based information.

The next subsections discuss ways that, alone or in combination, protect civil liberties in the taught system. Again, there are three separate persons or entities described here: the customer (the person being authenticated or identified), the biometric authenticator (the entity or system that captures the digital fingerprint of the customer and outputs a serial number), and the system operator (the entity holding information on the customer including permissions and, possibly, identity. The system operator responds to the serial number to grant the permissions it allows to the customer.

**Opt-in only.** Owners of existing systems sometimes promise that their biometric authentication will only be used in an opt-in way or for a specified purpose, but history has shown that such promises are rapidly abandoned under the pressure of corporate profits or perceived law enforcement needs. The taught system does not require trust of the system operator to protect privacy: it only works in an opt-in environment and therefore cannot be used on the general population.

In one preferred embodiment of the taught system a customer, seeking to have his biometric information available to authenticate him for some desired use, has agreed (through application, signing of a form, as a condition of employment, or simply being at the access point to a secure space) to have his biometric information captured. He stands in front of the kiosk and multiple images are captured. From those captured images a digital fingerprint is created and the images are destroyed by the induction system, being of no further use.

The digital fingerprint is assigned a serial number at the point of induction from, say, a list supplied by the system operator to the biometric authenticator. The serial number and the customer's digital fingerprint are stored together in a database controlled by the biometric authenticator, and the two associated in a database controlled by the biometric authenticator (for example, datastore 116 in Figure 1, records 180). At the same time this initial induction is made, the customer provides identity documents, employment documents, or other information that will be associated with him in the system operator's database.

It will be seen that whether the system operator receives the digital fingerprint and associates it directly with the information on the customer in its database or whether there is the intermediate step by the biometric inductor of matching the digital fingerprint to a serial number, essentially the same protections are in place: no information capable of being turned into directly identifying characteristics (as opposed to being linked in the database to identifying information) of the individual has been passed to the system operator. The reason it largely does not matter where the digital fingerprint is stored is that the digital fingerprint contains no information that, absent what it is linked to directly or indirectly in the system operator's database, can be used to identify, characterize, or profile the customer.

The serial number and the associated information are passed on to the system operator for induction into its database (the sysop database). Additional information on this individual (such as employment, flight number, access allowances) may also be included in the database, linked to the serial number. The identifying information is not retained by the biometric authenticator (which only retains the digital fingerprint linked to the serial number, if that). Alternatively, the customer can present the identifying information directly to the system operator and thus ensure that no one ever has information that associates how the person looks and who the person is that is not supposed to have that information.

At a later authentication, the customer again approaches a kiosk (or other capture system) and is digitally fingerprinted. If the digital fingerprint matches one in the biometric authenticator's database (or one held by the customer), the serial number is sent along to the system operator who grants the sought permissions. Alternatively, in some embodiments, the digital fingerprint may be sent to the system operator, provided the customer's digital fingerprint had been stored with the system operator at induction.

This dissociated data storage assures that no one has any direct link between the customer himself, his images, and identifying information. No additional parties can therefore do profiling or otherwise abuse the authentication system. The only people who can directly associate the customer with his appearance and identity are the customer himself and the system operator (to whom the customer presumably voluntarily presented the information).

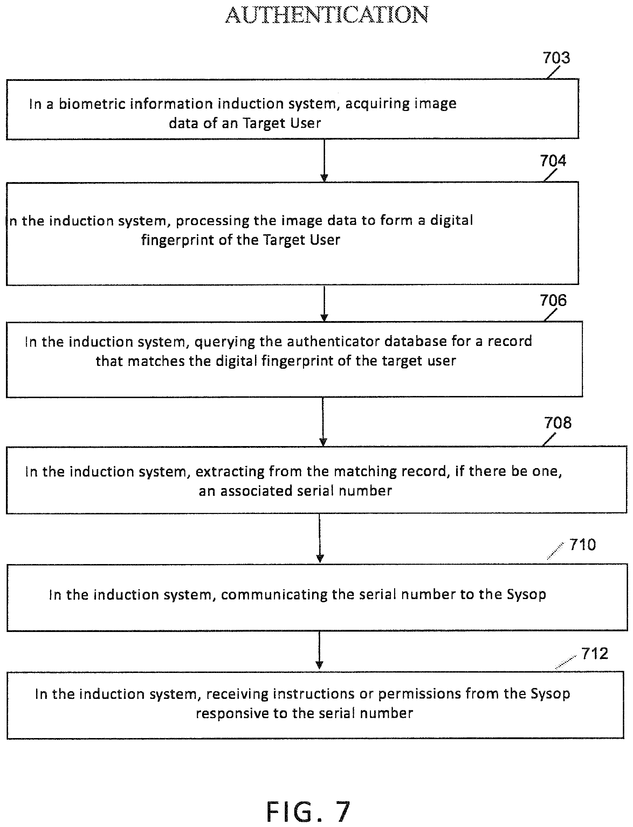

Figure 7 is a simplified flow diagram of an example process for biometric authentication of a person while protecting their privacy. This process calls for, in a biometric information induction system, acquiring image data of a Target User, block 703. In the induction system, processing the image data to form a digital fingerprint of the Target User, block 704. Then in the induction system, querying the authenticator database for a record that matches the digital fingerprint of the target user, block 706.

Next, in the induction system, extracting from the matching record, if there be one, an associated serial number, block 708. Then, in the induction system, communicating the serial number to the System Operator, block 710. Finally, in the induction (authentication) system, receiving instructions or permissions from the System Operator responsive to the serial number. The authentication system then applies or implements the received instructions or permissions.

### Enhancing Privacy and User (Customer) Control

Referring again to the induction - digital fingerprinting process, in a preferred embodiment, the induction system removes from the stored digital fingerprints points of interest that are too similar to those in other prints or records. This helps to ensure reliable and unique matching to correct records for later authentication.

Identification, if it ties an individual to a particular category of people (such as their race), can be used for profiling and other abuses. The taught system preferably finds points of interest in an image or set of images and then removes points of interest that are too close (in feature space) to features on several examples of the kind of item being digitally fingerprinted, in this case people. The result is to leave a digital fingerprint that preserves only the information that makes a particular individual unique. By design, this important feature removes anything that identifies the individual's color, race, or other group membership. Since only the resulting digital fingerprint is stored, there is no way to reconstruct anything that looks like the customer, characterizes the customer, or profiles the customer from the digital fingerprint.

Identification, if it ties an individual to a particular category of people (such as their race), can be used for profiling and other abuses. The taught system finds points of interest in an image or set of images and then removes points of interest that are too close (in feature space) to features on several examples of the kind of item being digitally fingerprinted, in this case people. The result is to leave a digital fingerprint that preserves only the information that makes a particular individual unique. By construction, this removes anything that identifies the individual's color, race, or other group membership. Since only the resulting digital fingerprint is stored, there is no way to reconstruct anything that looks like the customer, characterizes the customer, or profiles the customer from the digital fingerprint.

No ability to reconstruct images. In addition to not preserving images, the digital fingerprinting system taught in this disclosure produces a digital fingerprint that cannot be reverse engineered to produce any kind of likeness. This naturally follows from the intentional removal of all class-based information. What is left distinguishes one individual from another and looks like noise. Any information that would be needed to reverse engineer the image has been removed as a natural part our digital fingerprinting approach. To strengthen this further, all positional information can be removed from the point of interest characterizations, and (possibly) replaced by other "filtering" information such as orientation angle of the image surrounding the digital fingerprint. Additional methods of characterizing points of interest without including positional information are known in the art.

To illustrate, imagine taking, say, the second 1000 digits of Pi. There are no mathematical tests that can be run on that string of numbers that will show it to be other than random. All of its statistics are of a random string of 1000 digits. Of itself, the string contains no information. But knowing it is the second thousand digits of Pi, it can be seen that the string isn't random at all. It has a very specific meaning, but only in the context of knowing what Pi is and where in digits of Pi the string came. Similarly, the digital fingerprint of an individual (indeed, of any object) looks like pure noise - until it is specifically linked to information in the system operator's database. Like those digits of Pi, a digital fingerprint of the kind taught in this patent contains no information outside what it links to in the system operator's database. It is this separation of knowledge - the images are turned into a digital fingerprint in itself essentially indistinguishable from noise that is then linked to information on the customer in the system operator's database - that allows embodying the central teaching of this patent.

User-control of biometric data. The taught system can have additional security that prevents abuse. In one preferred embodiment the digital fingerprint is extracted by the digital fingerprinting system and stored on the smart phone of the customer in an encrypted state (such as by encrypting with the system's private key) that is not accessible to anyone but the digital fingerprinting system. Also stored is the serial number discussed above.

No record of the customer's digital fingerprint is stored except in a system available only to the customer. In one embodiment, at authentication, the customer connects his phone to the digital fingerprint (induction) system. The system extracts a digital fingerprint, sends it to his phone where it is compared with the one captured at induction. If it is a close enough match, the phone tells that to the digital fingerprint system which then releases the associated serial number.

Use of any skin or body part. In another preferred embodiment digital fingerprints are captured from a body part different from a face, such as the back of a hand. Doing authentication using a body part that is generally unrecognizable by people further reduces the ability to profile.

### EXAMPLES:

Example 1. A method of providing protective authentication of individuals, the method comprising: acquiring, by a first processor-based system, an image of at least portion of a first individual; generating, by the first processor-based system, a digital fingerprint based on the acquired image; associating, by the first processor-based system, the generated digital fingerprint with a respective unique token, wherein the respective unique token does not itself comprise or provide any personally identifying information of the first individual; collecting, by the first processor-based system, identifying information about the first individual; providing, by the first processor-based system, the collected identifying information along with the respective unique token to a second processor-based system without the digital fingerprint, the second processor-based system different from the first processor-based system and under control of a second entity to an authentication system; and destroying, by the first processor-based system, the acquired image and the collected identifying information from the first processor-based system.
Example 2. The method of example 1, further comprising: removing all class-based identifying information before generating the digital fingerprint based on the acquired image.
Example 3. The method of example 1 or example 2, further comprising: removing one or more points of interest from a representation of the acquired image based on commonality of the one or more points of interest in a plurality of acquired images across a defined class of individuals.
Example 4. The method of example 3 wherein generating a digital fingerprint based on the acquired image comprises generating a digital fingerprint that uniquely identifies the first individual from all other individuals.
Example 5. The method of any of examples 1-4 wherein collecting identifying information about the first individual comprises collecting identifying information directly from the first individual.
Example 6. The method of any of examples 1-5 wherein the first processor-based system is a processor-based induction system under the control of a first entity, and wherein providing the collected identifying information along with the respective unique token to a second processor-based system without the digital fingerprint includes providing the collected identifying information along with the respective unique token to a processor-based authentication system under control of a second entity by processor-based induction system under the control of the first entity, the second entity different from the first entity.
Example 7. The method of any of examples 1-6 wherein destroying the acquired image and the collected identifying information from the first processor-based system includes destroying the acquired image and the collected identifying information from the first processor-based system without retaining any backup of the acquired image and the collected identifying information at the first processor-based system.
Example 8. The method of any of examples 1-7, further comprising: exporting, by the first processor-based system, the digital fingerprint in an encrypted state to a storage device of the first individual.
Example 9. The method of any of examples 1-8 wherein associating, by the first processor-based system, the generated digital fingerprint with a respective unique token, wherein the respective unique token does not itself comprise or provide any personally identifying information of the first individual comprises logically associating the generated digital fingerprint with a unique identifier that uniquely identifies a record in a database.
Example 10. The method of example 9, further comprising: storing the collected identifying information about the first individual in the record in the database that is uniquely identified by the unique identifier logically associated with the generated digital fingerprint.
Example 11. The method of any of examples 1-10, the method further comprising: acquiring, by the first processor-based system, a respective image of at least portion of each of a plurality of additional individuals; generating, by the first processor-based system, a respective digital fingerprint based on the respective acquired images; associating, by the first processor-based system, the respective generated digital fingerprints with a respective unique token, wherein the respective unique token does not itself comprise or provide any personally identifying information of a respective one of the additional individuals; collecting, by the first processor-based system, respective identifying information about the additional individuals; providing, by the first processor-based system, the collected identifying information along with the respective unique token to the second processor-based system without the respective digital fingerprints; and destroying, by the first processor-based system, the respective acquired images and the respective collected identifying information of the additional individuals.
Example 12. The method of example 11, the method further comprising: determining, by the first processor-based system, whether a received digital fingerprint matches a reference digital fingerprint within a defined threshold; and in response to determining that the received digital fingerprint matches the reference digital fingerprint within the defined threshold, transferring, by the first processor-based system, a unique token logically associated with the reference digital fingerprint without any personally identifying information.
Example 13. A first processor-based system of providing protective authentication of individuals, the processor-based system comprising: at least one processor; and at least one transitory or non-transitory processor-readable medium communicatively coupled to the at least one processor and which stores processor-executable instructions which, when executed by the at least one processor, cause the at least one processor to: acquire an image of at least portion of a first individual; generate a digital fingerprint based on the acquired image; associate the generated digital fingerprint with a respective unique token, wherein the respective unique token does not itself comprise or provide any personally identifying information of the first individual; collect identifying information about the first individual; provide the collected identifying information along with the respective unique token to a second processor-based system without the digital fingerprint, the second processor-based system different from the first processor-based system and under control of a second entity to an authentication system; and destroy the acquired image and the collected identifying information from the first processor-based system.
Example 14. The first processor-based system of example 13 wherein the processor-executable instructions, when executed, cause the at least one processor further to: remove all class-based identifying information before generating the digital fingerprint based on the acquired image.
Example 15. The first processor-based system of example 13 or example 14 wherein the processor-executable instructions, when executed, cause the at least one processor further to: remove one or more points of interest from a representation of the acquired image based on commonality of the one or more points of interest in a plurality of acquired images across a defined class of individuals.
Example 16. The first processor-based system of example 15 wherein to generate a digital fingerprint based on the acquired image, the processor-executable instructions cause the at least one processor to generate a digital fingerprint that uniquely identifies the first individual from all other individuals.
Example 17. The first processor-based system of any of examples 13-16 wherein to collect identifying information about the first individual, the processor-executable instructions cause the at least one processor to collect identifying information directly from the first individual.
Example 18. The first processor-based system of any of examples 13-17 wherein the first processor-based system is a processor-based induction system under the control of a first entity, and wherein to provide the collected identifying information along with the respective unique token to a second processor-based system without the digital fingerprint, the processor-executable instructions cause the at least one processor to transmit the collected identifying information along with the respective unique token to a processor-based authentication system under control of a second entity by processor-based induction system under the control of the first entity, the second entity different from the first entity.
Example 19. The first processor-based system of any of examples 13-18 wherein to destroy the acquired image and the collected identifying information from the first processor-based system, the processor-executable instructions cause the at least one processor to destroy the acquired image and the collected identifying information from the first processor-based system without retaining any backup of the acquired image and the collected identifying information at the first processor-based system.
Example 20. The first processor-based system of any of examples 13-19 wherein the processor-executable instructions, when executed by the at least one processor, cause the at least one processor further to: export the digital fingerprint in an encrypted state to a storage device of the first individual.
Example 21. The first processor-based system of any of examples 13-20 wherein to associate the generated digital fingerprint with a respective unique token, the processor-executable instructions cause the at least one processor to logically associate the generated digital fingerprint with a unique identifier that uniquely identifies a record in a database, and wherein the processor-executable instructions, when executed by the at least one processor, cause the at least one processor further to: store the collected identifying information about the first individual in the record in the database that is uniquely identified by the unique identifier logically associated with the generated digital fingerprint.
Example 22. The first processor-based system of any of examples 13-21 wherein the processor-executable instructions, when executed by the at least one processor, cause the at least one processor further to: acquire a respective image of at least portion of each of a plurality of additional individuals; generate a respective digital fingerprint based on the respective acquired images; associate the respective generated digital fingerprints with a respective unique token, wherein the respective unique token does not itself comprise or provide any personally identifying information of a respective one of the additional individuals; collect respective identifying information about the additional individuals; provide the collected identifying information along with the respective unique token to the second processor-based system without the respective digital fingerprints; destroy the respective acquired images and the respective collected identifying information of the additional individuals; determine whether a received digital fingerprint matches a reference digital fingerprint within a defined threshold; and in response to a determination that the received digital fingerprint matches the reference digital fingerprint within the defined threshold, transfer, by the first processor-based system, a unique token logically associated with the reference digital fingerprint without any personally identifying information.
Example 23. A method of providing protective authentication of individuals, the method comprising: acquiring, by a first processor-based system, an image of at least portion of a first individual; generating, by the first processor-based system, a first digital fingerprint based on the acquired image; determining, by the first processor-based system, whether the first digital fingerprint matches a reference digital fingerprint within a defined threshold; and in response to determining that the first digital fingerprint matches a reference digital fingerprint within a defined threshold, providing, by the first processor-based system, a unique token logically associated with the reference digital fingerprint without any personally identifying information.
Example 24. The method of example 23, further comprising: destroying, by the first processor-based system, the acquired image.
Example 25. The method of example 23 or example 24, further comprising: removing all class-based identifying information before generating the digital fingerprint based on the acquired image.
Example 26. The method of any of examples 23-25, further comprising: removing one or more points of interest from a representation of the acquired image based on commonality of the one or more points of interest in a plurality of acquired images across a defined class of individuals.
Example 27. The method of any of examples 23-26 wherein providing a unique token logically associated with the reference digital fingerprint without any personally identifying information comprises transmitting the unique token to a second processor-based system without transmitting any personally identifying information, the second processor-based system different from the first processor-based system, and under control of a different entity than an entity that controls the first processor-based system.
Example 28. A first processor-based system of providing protective authentication of individuals, the processor-based system comprising: at least one processor; and at least one transitory or non-transitory processor-readable medium communicatively coupled to the at least one processor and which stores processor-executable instructions which, when executed by the at least one processor, cause the at least one processor to: acquire an image of at least portion of a first individual; generate a first digital fingerprint based on the acquired image; determine whether the first digital fingerprint matches a reference digital fingerprint within a defined threshold; and in response to a determination that the first digital fingerprint matches a reference digital fingerprint within a defined threshold, provide a unique token logically associated with the reference digital fingerprint without any personally identifying information.
Example 29. The first processor-based system of example 28 wherein the processor-executable instructions, when executed, cause the at least one processor further to: destroy the acquired image.
Example 30. The first processor-based system of example 28 or example 29 wherein the processor-executable instructions, when executed, cause the at least one processor further to: remove all class-based identifying information before generating the digital fingerprint based on the acquired image.
Example 31. The first processor-based system of any of examples 28-30 wherein the processor-executable instructions, when executed, cause the at least one processor further to: remove one or more points of interest from a representation of the acquired image based on commonality of the one or more points of interest in a plurality of acquired images across a defined class of individuals.
Example 32. The first processor-based system of any of examples 28-31 wherein to provide a unique token logically associated with the reference digital fingerprint without any personally identifying information, the processor-executable instructions cause the at least one processor to transmit the unique token to a second processor-based system without transmitting any personally identifying information, the second processor-based system different from the first processor-based system, and under control of a different entity than an entity that controls the first processor-based system.
Example 33. A method comprising: provisioning an authentication database and an authentication processor having access to the authentication database; storing records in the authentication database comprising a set of reference digital fingerprints, wherein each of the reference digital fingerprints is associated in the database with a different identifier such as a serial number; capturing digital image data of a target person; in the authentication processor, forming a new digital fingerprint based on the image data; in the authentication processor, querying the authentication database, based on the new digital fingerprint, to find a matching reference digital fingerprint record; in the authentication processor, extracting a serial number from the matching record, if one is found, and communicating the serial number to a system operator server; and in the authentication processor, receiving a result from the system operator server, the result comprising information liked to the serial number in the system operator server.
Example 34. The method of example 33 wherein the reference digital fingerprint and associated serial number are stored on a device under exclusive control of a customer.
Example 35. The method of example 34 wherein the digital fingerprint is stored on the customer's device in an encrypted form so that the customer can neither duplicate (to add a different digital fingerprint) nor decrypt it.
Example 36. The method of example 34 or example 35 wherein the device comprises a smart phone.
Example 37. A method comprising, at identification, a digital fingerprint is extracted again by the biometric information capturer. If the person holds his own digital fingerprint, the newly-extracted one is compared with the stored one and, if the match is sufficiently close, the stored serial number is passed on to the system operator's database. In this case the biometric information capturer does not retain a database of the customers' digital fingerprints. If the customer does not hold his own digital fingerprint (in association with the serial number), then the biometric information capturer must store such information. But in either case all identifying information beyond the digital fingerprint is destroyed.

The above description of illustrated embodiments, including what is described in the Abstract, is not intended to be exhaustive or to limit the embodiments to the precise forms disclosed. Although specific embodiments and examples are described herein for illustrative purposes, various equivalent modifications can be made without departing from the spirit and scope of the disclosure, as will be recognized by those skilled in the relevant art. The teachings provided herein of the various embodiments can be applied to other systems, not necessarily the exemplary systems generally described above.

For instance, the foregoing detailed description has set forth various embodiments of the devices and/or processes via the use of block diagrams, schematics, and examples. Insofar as such block diagrams, schematics, and examples contain one or more functions and/or operations, it will be understood by those skilled in the art that each function and/or operation within such block diagrams, flowcharts, or examples can be implemented, individually and/or collectively, by a wide range of hardware, software, firmware, or virtually any combination thereof. In one embodiment, the present subject matter may be implemented via Application Specific Integrated Circuits (ASICs). However, those skilled in the art will recognize that the embodiments disclosed herein, in whole or in part, can be equivalently implemented in standard integrated circuits, as one or more computer programs running on one or more computers *(e.g.,* as one or more programs running on one or more computer systems), as one or more programs running on one or more controllers *(e.g.,* microcontrollers) as one or more programs running on one or more processors *(e.g.,* microprocessors), as firmware, or as virtually any combination thereof, and that designing the circuitry and/or writing the code for the software and or firmware would be well within the skill of one of ordinary skill in the art in light of this disclosure.

In addition, those skilled in the art will appreciate that the mechanisms taught herein are capable of being distributed as a program product in a variety of forms, and that an illustrative embodiment applies equally regardless of the particular type of signal bearing media used to actually carry out the distribution. Examples of non-transitory signal bearing media include, but are not limited to, the following: recordable type media such as, hard disk drives, DVD -ROMs, flash memory, and computer memory; and other non-transitory computer-readable storage media.

The various implementations described above can be combined to provide further implementations. All of the commonly assigned US patent application publications, US patent applications, foreign patents, and foreign patent applications referred to in this specification and/or listed in the Application Data Sheet are incorporated herein by reference, in their entirety, including but not limited to: US Provisional Patent Application No. 62/993,693; US Provisional Patent Application No. 62/760,318; and US Patent Application No. 16/681,698.

These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure.

## Claims

1. A method of providing protective authentication of individuals, the method comprising:
acquiring, by a first processor-based system, an image of at least portion of a first individual;
generating, by the first processor-based system, a digital fingerprint based on the acquired image;
associating, by the first processor-based system, the generated digital fingerprint with a respective unique token, wherein the respective unique token does not itself comprise or provide any personally identifying information of the first individual;
collecting, by the first processor-based system, identifying information about the first individual;
providing, by the first processor-based system, the collected identifying information along with the respective unique token to a second processor-based system without the digital fingerprint, the second processor-based system different from the first processor-based system and under control of a second entity to an authentication system; and
destroying, by the first processor-based system, the acquired image and the collected identifying information from the first processor-based system.

2. The method of claim 1, further comprising:
removing all class-based identifying information before generating the digital fingerprint based on the acquired image.

3. The method of claim 1 or claim 2, further comprising:
removing one or more points of interest from a representation of the acquired image based on commonality of the one or more points of interest in a plurality of acquired images across a defined class of individuals; and
wherein generating a digital fingerprint based on the acquired image in some embodiments comprises generating a digital fingerprint that uniquely identifies the first individual from all other individuals.

4. The method of any of claims 1-3,
wherein collecting identifying information about the first individual comprises collecting identifying information directly from the first individual; and/or
wherein the first processor-based system is a processor-based induction system under the control of a first entity, and wherein providing the collected identifying information along with the respective unique token to a second processor-based system without the digital fingerprint includes providing the collected identifying information along with the respective unique token to a processor-based authentication system under control of a second entity by processor-based induction system under the control of the first entity, the second entity different from the first entity.

5. The method of any of claims 1-4,
wherein destroying the acquired image and the collected identifying information from the first processor-based system includes destroying the acquired image and the collected identifying information from the first processor-based system without retaining any backup of the acquired image and the collected identifying information at the first processor-based system; and/or
wherein the method further comprises exporting, by the first processor-based system, the digital fingerprint in an encrypted state to a storage device of the first individual.

6. The method of any of claims 1-5,
wherein associating, by the first processor-based system, the generated digital fingerprint with a respective unique token, wherein the respective unique token does not itself comprise or provide any personally identifying information of the first individual comprises logically associating the generated digital fingerprint with a unique identifier that uniquely identifies a record in a database; and
wherein the method in some embodiments further comprises storing the collected identifying information about the first individual in the record in the database that is uniquely identified by the unique identifier logically associated with the generated digital fingerprint.

7. The method of any of claims 1-6, the method further comprising:
acquiring, by the first processor-based system, a respective image of at least portion of each of a plurality of additional individuals;
generating, by the first processor-based system, a respective digital fingerprint based on the respective acquired images;
associating, by the first processor-based system, the respective generated digital fingerprints with a respective unique token, wherein the respective unique token does not itself comprise or provide any personally identifying information of a respective one of the additional individuals;
collecting, by the first processor-based system, respective identifying information about the additional individuals;
providing, by the first processor-based system, the collected identifying information along with the respective unique token to the second processor-based system without the respective digital fingerprints;
destroying, by the first processor-based system, the respective acquired images and the respective collected identifying information of the additional individuals;
wherein the method in some embodiments further comprises:
determining, by the first processor-based system, whether a received digital fingerprint matches a reference digital fingerprint within a defined threshold; and
in response to determining that the received digital fingerprint matches the reference digital fingerprint within the defined threshold, transferring, by the first processor-based system, a unique token logically associated with the reference digital fingerprint without any personally identifying information.

8. A first processor-based system of providing identify protective authentication of individuals, the processor-based system comprising:
at least one processor; and
at least one processor-readable medium communicatively coupled to the at least one processor and which stores processor-executable instructions which, when executed by the at least one processor, cause the at least one processor to perform operations which comprise the operations recited in any of claims 1-7.

9. A method of providing protective authentication of individuals, the method comprising:
acquiring, by a first processor-based system, an image of at least portion of a first individual;
generating, by the first processor-based system, a first digital fingerprint based on the acquired image;
determining, by the first processor-based system, whether the first digital fingerprint matches a reference digital fingerprint within a defined threshold; and
in response to determining that the first digital fingerprint matches a reference digital fingerprint within a defined threshold, providing, by the first processor-based system, a unique token logically associated with the reference digital fingerprint without any personally identifying information.

10. The method of claim 9, further comprising:
destroying, by the first processor-based system, the acquired image; and/or
removing all class-based identifying information before generating the digital fingerprint based on the acquired image.

11. The method of claim 9 or claim 10,
wherein the method further comprises removing one or more points of interest from a representation of the acquired image based on commonality of the one or more points of interest in a plurality of acquired images across a defined class of individuals; and/or
wherein providing a unique token logically associated with the reference digital fingerprint without any personally identifying information comprises transmitting the unique token to a second processor-based system without transmitting any personally identifying information, the second processor-based system different from the first processor-based system, and under control of a different entity than an entity that controls the first processor-based system.

12. A first processor-based system of providing protective authentication of individuals, the processor-based system comprising:
at least one processor; and
at least one processor-readable medium communicatively coupled to the at least one processor and which stores processor-executable instructions which, when executed by the at least one processor, cause the at least one processor to perform operations which comprise the operations recited in any of claims 9-11.

13. A use of an authentication database and an authentication processor having access to the authentication database, the use comprising:
provisioning the authentication database and the authentication processor;
storing records in the authentication database comprising a set of reference digital fingerprints, wherein each of the reference digital fingerprints is associated in the database with a different identifier such as a serial number;
capturing digital image data of a target person;
in the authentication processor, forming a new digital fingerprint based on the image data;
in the authentication processor, querying the authentication database, based on the new digital fingerprint, to find a matching reference digital fingerprint record;
in the authentication processor, extracting a serial number from the matching record, if one is found, and communicating the serial number to a system operator server; and in the authentication processor, receiving a result from the system operator server, the result comprising information liked to the serial number in the system operator server.

14. The use of claim 13 wherein the reference digital fingerprint and associated serial number are stored on a device under exclusive control of a customer.

15. The use of claim 14,
wherein the digital fingerprint is stored on the customer's device in an encrypted form so that the customer can neither duplicate nor decrypt it; and/or
wherein the device comprises a smart phone.
